# EUROPÄISCHE PATENTSCHRIFT

(11) **EP 1 775 175 B1**
(45) Veröffentlichungstag und Bekanntmachung des Hinweises auf die Patenterteilung: **25.06.2008**
(21) Anmeldenummer: 06021238.8
(22) Anmeldetag: 10.10.2006
(51) Int. Cl.: B60R 21/217

(54) **Gasgenerator für eine Airbageinrichtung, Bauteilsatz mit einem solchen Gasgenerator und einem Airbaggehäuse und Verfahren zur Herstellung einer Airbageinrichtung**
Inflator for an airbag device, building set with such an inflator and an airbag housing and method for producing such an airbag device
Génerateur de gaz pour un dispositif d'airbag, ensemble de construction avec un tel génerateur et un boîtier d'airbag et un procédé pour la fabrication d'un tel dispositif d'airbag.

(30) Priorität: 14.10.2005 DE 102005049154
(43) Veröffentlichungstag der Anmeldung: 18.04.2007
(73) Patentinhaber: GM Global Technology Operations, Inc., Detroit, MI 48265-3000 (US)
(72) Erfinder: Bonarens, Frank, 61440 Oberursel (DE); Diehl, Johannes, 55291 Saulheim (DE)
(74) Vertreter: Strauss, Peter

(56) Entgegenhaltungen:
- DE-U1- 20 112 313
- US-A- 5 620 200
- US-A- 5 700 028
- US-A- 6 126 191

## Beschreibung

Die vorliegende Erfindung betrifft einen Gasgenerator für eine Airbageinrichtung, der in eine Gasgeneratorkammer eines Airbaggehäuses eingeführt werden kann, in der Stützrippen zum seitlichen Abstützen des Gasgenerators vorgesehen sind. Die vorliegende Erfindung betrifft ferner einen Bauteilsatz mit einem solchen Gasgenerator und einem Airbaggehäuse sowie ein Verfahren zur Herstellung einer Airbageinrichtung.

Aus dem Stand der Technik sind unterschiedliche Airbageinrichtungen bekannt, die regelmäßig ein Airbaggehäuse umfassen, in dem eine Gassackkammer zur Aufnahme eines aufblasbaren Gassackes und eine Gasgeneratorkammer zur Aufnahme eines Gasgenerators vorgesehen ist. Dabei werden verschiedene Methoden zum Einbringen und Befestigen des Gasgenerators innerhalb der Gasgeneratorkammer vorgeschlagen.

So beschreibt die DE 195 38 870 C2 eine Airbageinrichtung, bei der das Airbaggehäuse zweiteilig ausgebildet ist. Nach dem Einbringen des Gasgenerators in die eine Hälfte wird die andere Hälfte darauf angeordnet, so dass der Gasgenerator innerhalb einer Gasgeneratorkammer angeordnet ist. Der im Wesentlichen zylindrische Gasgenerator liegt dabei stirnseitig in Vertiefungen in der Gasgeneratorkammer ein. Die Abmessungen der Vertiefungen müssen dabei exakt auf die Abmessungen der Stirnseiten des Gasgenerators abgestimmt sein, um einen sicheren Halt desselben zu gewährleisten. Sollten die Vertiefungen beispielsweise zu klein ausgebildet sein, so lässt sich das Airbaggehäuse nicht mehr oder nur unter Erzeugung von hohen Fügespannungen zusammenklappen.

Aus der DE 43 38 66 C2 ist ein Airbaggehäuse bekannt, das einteilig aufgebaut ist, wobei der Gasgenerator durch eine seitliche Öffnung in die Gasgeneratorkammer eingeschoben wird. Nähere Angaben zum Einbringen und Befestigen des Gasgenerators sind hierin nicht offenbart.

Aus der Praxis sind weitere Ausführungsformen von Airbageinrichtungen bekannt, bei denen der Gasgenerator ebenfalls seitlich in die Gasgeneratorkammer eingeschoben wird. Um den Gasgenerator innerhalb der Gasgeneratorkammer sicher und fest zu positionieren oder um einen Ringraum zu erzeugen, der durch die Außenwand des Gasgenerators einerseits und die Innenwand der Gasgeneratorkammer andererseits begrenzt ist, sind Stützrippen innerhalb der Gasgeneratorkammer vorgesehen. Die Stützrippen und der Gasgenerator sind dabei derart dimensioniert, dass durch das Einschieben des Gasgenerators eine Presspassung erzielt wird.

Eine der zuvor genannten Airbageinrichtung ähnliche Einrichtung ist ferner aus der US 6,126,191 A bekannt. Die bekannte Airbageinrichtung weist ein Gehäuse auf, das mit einem Gehäuseteil zur Aufnahme eines Gasgenerators versehen ist. Innerhalb des Gehäuseteils ist eine zylindrische Gasgeneratorkammer ausgebildet, in der der Gasgenerator aufnehmbar ist. Dabei sind Abstandsrippen an der Innenseite der Gasgeneratorkammer vorgesehen, die der Abstützung und Beabstandung des Gasgenerators gegenüber der Innenseite der Gasgeneratorkammer dienen.

Bei dem vorgenannten Stand der Technik ist es jedoch von Nachteil, dass sowohl der Gasgenerator als auch die Stützrippen sehr genau und mit einem geringen Toleranzbereich gefertigt werden müssen. Sollten die Stützrippen beispielsweise eine zu große Höhe aufweisen, so wird durch das Einführen des Gasgenerators ein derart hoher Druck auf die Stützrippen ausgeübt, dass grenzwertige Fügespannungen in dem Airbaggehäuse auftreten, die zu einem Versagen des Airbaggehäuses führen können.

Es ist daher eine Aufgabe der vorliegenden Erfindung, einen Gasgenerator zu schaffen, der in eine Gasgeneratorkammer mit Stützrippen eingeführt werden kann, wobei ein sicherer und fester Halt innerhalb der Gasgeneratorkammer gewährleistet ist und große Fügespannungen in dem Airbaggehäuse vermieden werden, ohne dass eine exakte Fertigung der einzelnen Bauteile mit geringen Toleranzbereichen erforderlich ist. Eine weitere Aufgabe der Erfindung besteht darin, einen Bauteilsatz aus einem Gasgenerator und einem Airbaggehäuse zu schaffen, der die vorgenannten Vorteile mit sich bringt. Des Weiteren liegt der Erfindung die Aufgabe zu Grunde, ein Verfahren zur Herstellung einer Airbageinrichtung anzugeben, das zu den genannten Vorteilen führt.

Diese Aufgabe wird durch die in den Patentansprüchen 1, 12 bzw. 20 angegebenen Merkmale gelöst. Vorteilhafte Ausführungsformen der Erfindung sind Gegenstand der Unteransprüche.

Der erfindungsgemäße Gasgenerator ist für eine Airbageinrichtung in einem Kraftfahrzeug konzipiert. Der Gasgenerator kann in eine Gasgeneratorkammer eines Airbaggehäuses eingeführt werden, in der Stützrippen zum seitlichen Abstützen des Gasgenerators vorgesehen sind. Erfindungsgemäß weist der Gasgenerator mindestens eine Schneidkante zum Zuschneiden der Stützrippen während des Einführens auf.

Der erfindungsgemäße Gasgenerator hat den Vorteil, dass die Stützrippen innerhalb der Gasgeneratorkammer innerhalb eines weiten Toleranzbereiches gefertigt werden können, da diese während des Einführvorganges durch die Schneidkante automatisch auf das ideale Maß geschnitten werden, so dass eine Presspassung mit dem gewünschten Druck zwischen den Stützrippen und dem Gasgenerator erzeugt wird, die für einen festen und sicheren Halt des Gasgenerators innerhalb der Gasgeneratorkammer sorgt. Hierdurch ist ferner sichergestellt, dass die in dem Airbaggehäuse auftretenden Fügespannungen stets geringer als ein Fügespannungsgrenzwert sind, dessen Erreichen zu einem Versagen des Airbaggehäuses führen würde.

In einer bevorzugten Ausführungsform des erfindungsgemäßen Gasgenerators kann die Höhe der Stützrippen durch die Schneidkante verringert werden. Unter der Höhe der Stützrippe ist hierbei beispielsweise die Länge der Stützrippe in radialer Richtung der Gasgeneratorkammer zu verstehen.

In einer besonders bevorzugten Ausführungsform des erfindungsgemäßen Gasgenerators weist die Schneidkante in die Einführrichtung des Gasgenerators, wobei die Einführrichtung des Gasgenerators diejenige Richtung beschreibt, in die der Gasgenerator während des Einführens in die Gasgeneratorkammer bewegt wird. Durch diese bevorzugte Ausrichtung kann die Schneidkante besonders einfach in die Stützrippen eindringen bzw. einschneiden, um diese zu verkürzen, wodurch die Montage des Gasgenerators vereinfacht ist.

In einer vorteilhaften Ausführungsform des erfindungsgemäßen Gasgenerators ist die Schneidkante am Umfang des Gasgenerators angeordnet. Auf diese Weise kann die Schneidkante sehr kurz ausgebildet sein, da der Umfang des Gasgenerators bereits in der Nähe der Stützrippen angeordnet ist.

In einer besonders vorteilhaften Ausführungsform des erfindungsgemäßen Gasgenerators ist die Schneidkante als umlaufende Schneidkante ausgebildet. Auf diese Weise kann der Gasgenerator in jeder Rotationsstellung eingeführt werden, wobei stets gewährleistet ist, dass die Schneidkante jede der Stützrippen erreicht und entsprechend zuschneidet.

In einer weiteren bevorzugten Ausführungsform des erfindungsgemäßen Gasgenerators weist der Gasgenerator einen Anlageabschnitt zum Anliegen an der Schnittfläche der Stützrippen auf. Unter der Schnittfläche ist hierbei die durch das Zuschneiden der Stützrippen entstehende neue Fläche zu verstehen. Der Anlageabschnitt ist in radialer Richtung auf gleicher Höhe wie oder um einen vorbestimmten Abstand weiter außen als die Schneidkante angeordnet. Bei gleicher Höhe wird somit eine schwache Presspassung erreicht, während bei einem hohen vorbestimmten Abstand zwischen Schneidkante und Anlageabschnitt eine stärkere Presspassung erzielt wird. Durch entsprechende Wahl das Abstandes kann somit die Befestigungssicherheit des Gasgenerators innerhalb der Gasgeneratorkammer vorgegeben werden, wobei darauf zu achten ist, dass der Abstand nicht derart groß wird, dass die in dem Airbaggehäuse auftretenden Fügespannungen einen vorgegebenen Fügespannungsgrenzwert überschreiten.

In einer weiteren vorteilhaften Ausführungsform des erfindungsgemäßen Gasgenerators ist der Anlageabschnitt hinter der Schneidkante angeordnet ist. Dies bedeutet, dass beim Einführen zunächst die Schneidkante der Stützrippe zugewandt ist, um diese zuzuschneiden, und der Anlageabschnitt erst danach zur Anlage an der entstandenen Schnittfläche kommt.

In einer weiteren bevorzugten Ausführungsform des erfindungsgemäßen Gasgenerators ist die Schneidkante an dem Gasgeneratorkopf angeordnet. Unter dem Gasgeneratorkopf ist hierbei dasjenige Ende des Gasgenerators zu verstehen, das dem einführseitigen Ende des Gasgenerators gegenüberliegt. Da der Gasgeneratorkopf meist nachträglich an dem Gasgenerator angebracht wird, ermöglicht dies eine besonders einfache Herstellung der Schneidkante zusammen mit dem Gasgeneratorkopf.

Vorzugsweise ist die Schneidkante daher einstückig mit dem Gasgeneratorkopf ausgebildet. So kann der Gasgeneratorkopf beispielsweise von einem Blechteil gebildet sein, dessen Rand, der auch gebördelt sein kann, die Schneidkante ausbildet.

Damit der Gasgeneratorkopf darüber hinaus die Einführtiefe begrenzen und die Schneidkante nächstmöglich an die Stützrippen heranführen kann, weist dieser in einer weiteren vorteilhaften Ausführungsform des erfindungsgemäßen Gasgenerators einen größeren Durchmesser als ein einführseitiger Abschnitt des Gasgenerators auf. So kann der größere Gasgeneratorkopf beispielsweise als Anschlag dienen, der an dem Airbaggehäuse anschlägt, wenn die gewünschte Einführtiefe erreicht ist. Darüber hinaus wird mit einem schmaleren einführseitigen Ende ein leichteres Einführen des Gasgenerators in die Gasgeneratorkammer ermöglicht.

In einer bevorzugten Ausführungsform des erfindungsgemäßen Gasgenerators schließt die Schneidkante einen Winkel von 90° ein. Um jedoch ein besonders gutes Eindringen der Schneidkante in die Stützrippe und ein leichtes Abführen des abgeschnittenen Materials zu ermöglichen, schließt die Schneidkante vorzugsweise einen Winkel ein, der kleiner als 90° ist. Hierdurch wird das Einführen des Gasgenerators in die Gasgeneratorkammer wesentlich vereinfacht.

Der erfindungsgemäße Bauteilsatz umfasst einen Gasgenerator der zuvor beschriebenen Art und ein Airbaggehäuse, das eine Gasgeneratorkammer aufweist, in die der Gasgenerator eingeführt werden kann, wobei Stützrippen zum seitlichen Abstützen des Gasgenerators in der Gasgeneratorkammer vorgesehen sind. Erfindungsgemäß sind die Stützrippen in der Gasgeneratorkammer und die Schneidkante des Gasgenerators derart ausgebildet, dass die Schneidkante des Gasgenerators die Stützrippen während des Einführens zuschneidet. So können die nach innen weisenden Kanten der Stützrippen beispielsweise einen Kreis einschließen, der einen geringeren Radius aufweist als ein Kreis, der von einer umlaufenden Schneidkante beschrieben wird. Bezüglich der Vorteile sei auf die obige Beschreibung verwiesen.

In einer bevorzugten Ausführungsform des erfindungsgemäßen Bauteilsatzes verlaufen die Stützrippen in Einführrichtung. Hierunter fällt beispielsweise auch eine Anordnung bei der die Stützrippen teilweise in Einführrichtung verlaufen.

Um ein einfacheres Einschneiden der Schneidkante zu ermöglichen, eine höhere Stabilität der Stützrippen zu gewährleisten und eine bessere Verteilung der Fügespannungen in das Airbaggehäuse sicherzustellen, ist der Querschnitt der Stützrippen in einer besonders bevorzugten Ausführungsform des erfindungsgemäßen Bauteilsatzes in Richtung der Mitte der Gasgeneratorkammer verjüngt. Dies bedeutet, dass diejenige Seite der Stützrippe, die in die Gasgeneratorkammer ragt, schmaler als diejenige Seite ist, die an der Gasgeneratorkammerwand angeordnet ist. So könnte die Stützrippe beispielsweise einen dreieckigen Querschnitt aufweisen.

In einer vorteilhaften Ausführungsform des erfindungsgemäßen Bauteilsatzes weist die Gasgeneratorkammer eine Einführöffnung, einen öffnungsseitigen Abschnitt und einen der Einführöffnung abgewandten Abschnitt auf, wobei der Durchmesser des öffnungsseitigen Abschnittes größer als der Durchmesser des der Einführöffnung abgewandten Abschnittes ist. Hierdurch wird das Einführen des Gasgenerators in die Gasgeneratorkammer vereinfacht.

Vorzugsweise ist zwischen dem öffnungsseitigen Abschnitt und dem der Einführöffnung abgewandten Abschnitt ein Ansatz vorgesehen. So kann dieser Ansatz beispielsweise als Anschlag für den Gasgeneratorkopf dienen, so dass das Einführen gestoppt wird, wenn die maximale Einführtiefe erreicht wird.

In einer weiteren bevorzugten Ausführungsform des erfindungsgemäßen Bauteilsatzes sind die Stützrippen in dem öffnungsseitigen Abschnitt vorgesehen. Während die Positionierung und Befestigung am einführseitigen Ende des Gasgenerators meist einfach mittels stirnseitiger Schrauben sichergestellt werden kann, ist dies im öffnungsseitigen Abschnitt schwieriger, so dass die sichere Befestigung und genaue Positionierung des Gasgenerators im Bereich des öffnungsseitigen Abschnitts durch diese Ausführungsform sichergestellt ist. Ferner führen erhöhte Fügespannungen insbesondere im Bereich der Einführöffnung häufig zu einem Versagen des Airbaggehäuses, was durch die Anordnung der zuzuschneidenden Stützrippen in diesem Bereich jedoch sicher verhindert wird.

Vorzugsweise besteht die Schneidkante aus Metall, während die Stützrippen aus Kunststoff bestehen. Die Stützrippen sollten hierbei einstückig mit dem Airbaggehäuse ausgebildet sein.

Um den Gasgenerator nach dem Einführen einfach und sicher zu befestigen, sind in einer weiteren vorteilhaften Ausführungsform des erfindungsgemäßen Bauteilsatzes ferner Rastmittel an dem Airbaggehäuse vorgesehen, die mit dem Gasgenerator verrasten, wenn dieser die Einbaulage erreicht hat. Die Rastmittel können beispielsweise mit entsprechenden Gegenrastmitteln an dem Gasgeneratorkopf zusammenwirken.

Das erfindungsgemäße Verfahren zur Herstellung einer Airbageinrichtung umfasst die Verfahrensschritte des Bereitstellens eines Airbaggehäuses mit einer Gasgeneratorkammer, in der Stützrippen zum seitlichen Abstützen eines Gasgenerators vorgesehen sind, des Bereitstellens eines Gasgenerators mit mindestens einer Schneidkante und des Einführens des Gasgenerators in die Gasgeneratorkammer, wobei die Stützrippen in der Gasgeneratorkammer und die Schneidkante des Gasgenerators derart ausgebildet sind, dass die Schneidkante des Gasgenerators die Stützrippen während des Einführens zuschneidet. Bezüglich der Vorteile des Verfahrens sei auf die Vorteile des erfindungsgemäßen Gasgenerators und des erfindungsgemäßen Bauteilsatzes verwiesen.

In einer besonders bevorzugten Ausführungsform wird als Gasgenerator und Airbaggehäuse ein Bauteilsatz der zuvor beschriebenen Art verwendet.

Die Erfindung wird im Folgenden an Hand von beispielhaften Ausführungsformen unter Bezugnahme auf die zugehörigen Zeichnungen näher erläutert. Es zeigen:
- Fig. 1: eine Seitenansicht des erfindungsgemäßen Gasgenerators in schematischer Darstellung,

- Fig. 2: eine Seitenansicht des Airbaggehäuses des erfindungsgemäßen Bauteilsatzes in geschnittener Darstellung,
- Fig. 3: eine Vorderansicht des Airbaggehäuses in Richtung des Pfeils B in Fig. 2,
- Fig. 4: den Ausschnitt A von Fig. 1 mit dem Gasgeneratorkopf in einer ersten Ausführungsform,
- Fig. 5: den Ausschnitt A von Fig. 1 mit dem Gasgeneratorkopf in einer zweiten Ausführungsform,
- Fig. 6: den Ausschnitt A von Fig. 1 mit dem Gasgeneratorkopf in einer dritten Ausführungsform und
- Fig. 7: den Ausschnitt A von Fig. 1 mit dem Gasgeneratorkopf in einer vierten Ausführungsform.

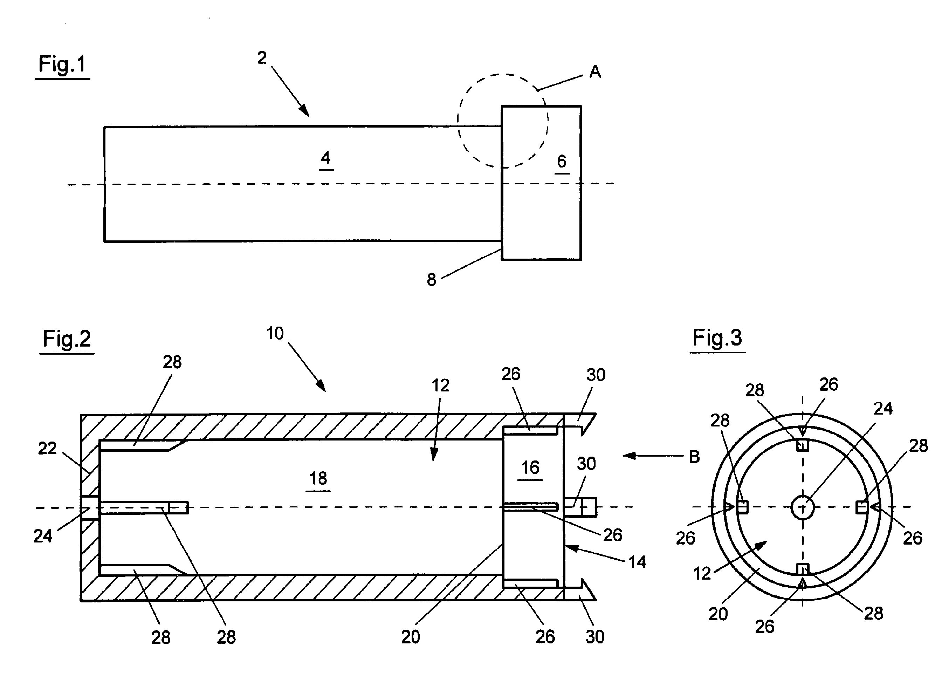

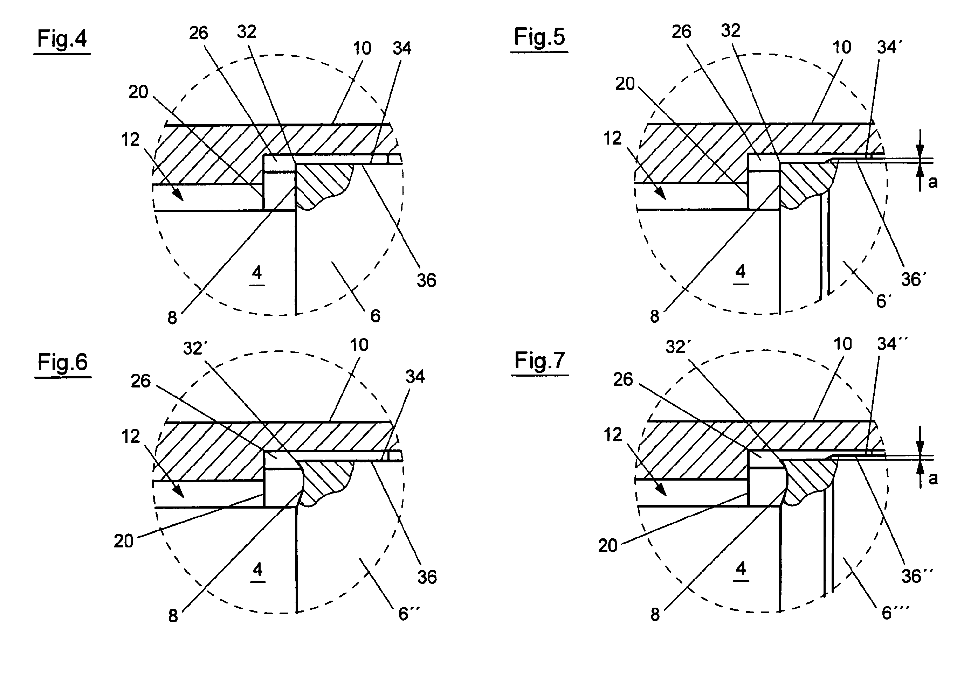

Fig. 1 zeigt eine schematische Darstellung des erfindungsgemäßen Gasgenerators 2 für eine Airbageinrichtung. Der Gasgenerator 2 kann in eine später eingehender beschriebene Gasgeneratorkammer eines Airbaggehäuses eingeführt werden. Zu diesem Zweck weist der Gasgenerator 2 ein einführseitigen Abschnitt 4, der in die spätere Einführrichtung weist, und einen auf der anderen Seite angeordneten Gasgeneratorkopf 6 auf. Der Gasgenerator 2 ist im Wesentlichen zylindrisch ausgebildet,
wobei der Gasgeneratorkopf 6 einen größeren Durchmesser als der einführseitige Abschnitt 4 hat, so dass ein umlaufender, in Einführrichtung weisender, vorspringender Ansatz 8 ausgebildet ist. Die unterschiedlichen Ausführungsformen des Gasgeneratorkopfes 6 werden später eingehender unter Bezugnahme auf die Fig. 4 bis 7 beschrieben.

Der erfindungsgemäße Bauteilsatz setzt sich aus dem Gasgenerator 2 von Fig. 1 und einem Airbaggehäuse 10 zusammen, das in den Fig. 2 und 3 dargestellt ist. Auf die Darstellung eines Luftsackes sowie der Kammer zur Aufnahme des gefalteten Luftsackes wurde in den Fig. 2 und 3 verzichtet, es ist vielmehr lediglich der Teil des Airbaggehäuses 10 dargestellt, in dem eine Gasgeneratorkammer 12 ausgebildet ist. Die Gasgeneratorkammer 12 ist im Wesentlichen zylindrisch ausgebildet und weist eine stirnseitige Einführöffnung 14 auf. An die Einführöffnung 14 schließt sich ein öffnungsseitiger Abschnitt 16 an. Auf den öffnungsseitigen Abschnitt 16 folgt ein der Einführöffnung 14 abgewandter Abschnitt 18, wobei der Durchmesser des öffnungsseitigen Abschnittes 16 größer als der Durchmesser des der Einführöffnung abgewandten Abschnittes 18 ist, so dass zwischen den beiden Abschnitten ein umlaufender, vorspringender Ansatz 20 ausgebildet ist. Die dem Abschnitt 16 abgewandte Stirnseite des Abschnittes 18 ist durch eine Wand 22 verschlossen, jedoch ist in der Wand 22 eine Bohrung 24 vorgesehen, durch die eine Schraube (nicht dargestellt) zum Befestigen des einführseitigen Abschnittes 4 des Gasgenerators 2 eingeführt werden kann.

In dem öffnungsseitigen Abschnitt 16 sind mehrere Stützrippen 26 angeordnet, die sich in Längsrichtung der Gasgeneratorkammer 12 und somit in die Einführrichtung erstrecken. Die Stützrippen 26, die dem seitlichen Abstützen des einzuführenden Gasgenerators 2 dienen, weisen einen Querschnitt auf, der in Richtung der Mitte der Gasgeneratorkammer 12 verjüngt ist. Im vorliegenden Beispiel wird dies dadurch erreicht, dass die Stützrippen einen dreieckigen Querschnitt aufweisen, wobei eine Spitze des Querschnitts in Richtung der Mitte der Gasgeneratorkammer 12 weist, wie dies in Fig. 3 gezeigt ist.

In dem der Einführöffnung 14 abgewandten Abschnitt 18 sind ferner seitliche Positionierrippen 28 vorgesehen, die ebenfalls in Längsrichtung der Gasgeneratorkammer 12 verlaufen. Die Positionierrippen 28 dienen der zentralen Positionierung des einzuführenden Gasgenerators 2 und sind an ihrem der Einführöffnung 14 zugewandten Ende angeschrägt, um ein einfaches Einführen des Gasgenerators 2 zu gewährleisten. An dem Airbaggehäuse 10 sind ferner Rastmittel in Form von Rasthaken 30 vorgesehen, die um die Einführöffnung 14 angeordnet sind und mit dem Gasgenerator 4 verrasten, wenn dieser bis in seine Einbaulage eingeführt wurde. Auf die Darstellung der Rasthaken wurde in Fig. 3 aus Gründen der Übersichtlichkeit verzichtet.

In Fig. 4 ist eine erste Ausführungsform des Gasgeneratorkopfes 6 und dessen Funktionsweise beim Einführen in die Gasgeneratorkammer 12 dargestellt. Der Gasgeneratorkopf 6 weist eine Schneidkante 32 auf, die im Bereich des in Einführrichtung weisenden Ansatzes 8 ausgebildet ist. Die Schneidkante 32 weist somit in die Einführrichtung und verläuft darüber hinaus entlang des Umfangs des Gasgeneratorkopfes 6. Es handelt sich hierbei um eine umlaufende Schneidkante 32, so dass es unerheblich ist, in welcher Rotationsstellung der Gasgenerator 2 eingeführt wird. Die Schneidkante 32 ist einstückig mit dem metallischen Gasgeneratorkopf 6 ausgebildet. In dem Beispiel nach Fig. 4 schließt die Schneidkante einen Winkel von 90° ein. An dem Umfang des Gasgeneratorkopfes 6 ist ferner ein umlaufender Anlageabschnitt 34 vorgesehen, wobei der Anlageabschnitt 34 in radialer Richtung auf gleicher Höhe wie die Schneidkante 32 und hinter der Schneidkante 32 angeordnet ist.

Beim Einführen des Gasgenerators 2 in die Gasgeneratorkammer 12 trifft nun die Schneidkante 32 stirnseitig auf die Stützrippen 26, so dass die Schneidkante 32 während des Einführens in die Stützrippen 26, die vorzugsweise aus Kunststoff bestehen und einstückig mit dem Airbaggehäuse 10 ausgebildet sind, einschneidet. Auf diese Weise wird die Höhe der Stützrippen 26 verringert und eine vorbestimmte Presspassung zwischen der entstandenen Schnittfläche 36 einerseits und dem Anlageabschnitt 34 andererseits erreicht. Sobald der umlaufende Ansatz 8 an dem Gasgenerator 8 an dem umlaufenden Ansatz 20 des Airbaggehäuses 10 anschlägt, ist die maximale Einführtiefe erreicht, und der der Einführöffnung 14 abgewandte Abschnitt 4 des Gasgenerators 2 kann mit Hilfe einer Schraube, die sich durch die Bohrung 24 erstreckt, stirnseitig befestigt werden. Darüber hinaus hintergreifen die Rasthaken 30 den Gasgeneratorkopf 6, sobald die maximale Einführtiefe erreicht ist.

Fig. 5 zeigt eine zweite Ausführungsform des Gasgeneratorkopfes 6, wobei die zweite Ausführungsform der ersten Ausführungsform nach Fig. 4 ähnelt, so dass nachstehend lediglich auf die Unterschiede eingegangen werden soll und die obige Beschreibung ansonsten entsprechend gilt. Für gleiche oder ähnliche Teile werden die gleichen Bezugszeichen verwendet.

Bei der zweiten Ausführungsform des Gasgeneratorkopfes 6' ist der umlaufende Anlageabschnitt 34' an dem Gasgenerator 2 in radialer Richtung weiter außen als die Schneidkante 32 angeordnet. So kommt es bei der zweiten Ausführungsform zwar auch zu einem Zuschneiden der Stützrippen 26 durch die Schneidkante 32, jedoch wird die Stützrippe 26 im Anschluss daran durch den weiter außen angeordneten Anlageabschnitt 34' nach außen gedrückt, um eine stärkere Presspassung zu erzielen. Durch vorherige Festlegung des Abstandes a in radialer Richtung zwischen der Schneidkante 32 einerseits und dem Anlageabschnitt 34' andererseits kann somit die gewünschte Presspassung erzielt werden.

Fig. 6 zeigt eine dritte Ausführungsform des Gasgeneratorkopfes 6", wobei die dritte Ausführungsform der ersten Ausführungsform nach Fig. 4 ähnelt, so dass nachstehend lediglich auf die Unterschiede eingegangen werden soll und die obige Beschreibung ansonsten entsprechend gilt. Für gleiche oder ähnliche Teile werden die gleichen Bezugszeichen verwendet.

Im Gegensatz zu der ersten Ausführungsform schließt die Schneidkante 32' bei der dritten Ausführungsform einen Winkel ein, der kleiner als 90° ist, wodurch ein besonders einfaches Zuschneiden der Stützrippen 26 ermöglicht ist. Der spitzere Winkel wird hierbei durch eine entsprechende Wölbung innerhalb des umlaufenden Ansatzes 8 an dem Gasgenerator 2 erreicht.

Fig. 7 zeigt eine vierte Ausführungsform des Gasgeneratorkopfes 6''', wobei die vierte Ausführungsform der dritten Ausführungsform nach Fig. 6 ähnelt, so dass nachstehend lediglich auf die Unterschiede eingegangen werden soll und die obige Beschreibung ansonsten entsprechend gilt. Für gleiche oder ähnliche Teile werden die gleichen Bezugszeichen verwendet.

Bei der vierten Ausführungsform des Gasgeneratorkopfes 6''' ist der umlaufende Anlageabschnitt 34'' an dem Gasgenerator 2 in radialer Richtung weiter außen als die Schneidkante 32' angeordnet. So kommt es bei der vierten Ausführungsform zu einem Zuschneiden der Stützrippen 26 durch die Schneidkante 32' und darüber hinaus wird die Stützrippe 26 anschließend durch den weiter außen angeordneten Anlageabschnitt 34' unter Druck gesetzt, um eine stärkere Presspassung zu erzielen. Durch vorherige Festlegung des Abstandes a in radialer Richtung zwischen der Schneidkante 32' einerseits und dem Anlageabschnitt 34'' andererseits kann somit die gewünschte Presspassung erzielt werden.

Die unter Bezugnahme auf die Fig. 4 bis 7 beschriebenen Ausführungsformen des Gasgeneratorkopfes können beispielsweise einfach mit Hilfe eines Blechformteiles realisiert werden, dessen Kante oder auch umbördelte Kante als Schneidkante und/oder Anlageabschnitt dient.

### Bezugszeichenliste

- 2: Gasgenerator
- 4: einführseitiger Abschnitt (Gasgenerator)
- 6,6',6'',6''': Gasgeneratorkopf
- 8: umlaufender Ansatz (Gasgenerator)
- 10: Airbaggehäuse
- 12: Gasgeneratorkammer
- 14: Einführöffnung
- 16: öffnungsseitiger Abschnitt
- 18: der Einführöffnung abgewandter Abschnitt
- 20: umlaufender Ansatz (Airbaggehäuse)
- 22: stirnseitige Wand
- 24: Bohrung
- 26: Stützrippen
- 28: Positionierrippen
- 30: Rasthaken
- 32, 32': Schneidkante
- 34, 34', 34'': Anlageabschnitt
- 36, 36', 36": Schnittfläche

- a: Abstand
- A: Ausschnitt
- B: Pfeil

## Patentansprüche

1. Gasgenerator für eine Airbageinrichtung, der in eine Gasgeneratorkammer eines Airbaggehäuses einführbar ist, in der Stützrippen zum seitlichen Abstützen des Gasgenerators vorgesehen sind, **dadurch gekennzeichnet, dass** der Gasgenerator (2) mindestens eine Schneidkante (32, 32') zum Zuschneiden der Stützrippen während des Einführens aufweist.

2. Gasgenerator nach Anspruch 1, **dadurch gekennzeichnet, dass** die Höhe der Stützrippen durch die Schneidkante (32, 32') verringerbar ist.

3. Gasgenerator nach einem der Ansprüche 1 oder 2, **dadurch gekennzeichnet, dass** die Schneidkante (32, 32') in die Einführrichtung des Gasgenerators (2) weist.

4. Gasgenerator nach einem der vorangehenden Ansprüche, **dadurch gekennzeichnet, dass** die Schneidkante (32, 32') am Umfang des Gasgenerators (2) angeordnet ist.

5. Gasgenerator nach Anspruch 4, **dadurch gekennzeichnet, dass** eine umlaufende Schneidkante (32, 32') vorgesehen ist.

6. Gasgenerator nach einem der vorangehenden Ansprüche, **dadurch gekennzeichnet, dass** der Gasgenerator (2) einen Anlageabschnitt (34, 34', 34") zum Anliegen an der Schnittfläche der Stützrippen aufweist, wobei der Anlageabschnitt (34, 34', 34") in radialer Richtung auf gleicher Höhe wie oder um einen vorbestimmten Abstand (a) weiter außen als die Schneidkante (32, 32') angeordnet ist.

7. Gasgenerator nach Anspruch 6, **dadurch gekennzeichnet, dass** der Anlageabschnitt (34, 34', 34") hinter der Schneidkante (32, 32') angeordnet ist.

8. Gasgenerator nach einem der vorangehenden Ansprüche, **dadurch gekennzeichnet, dass** die Schneidkante (32, 32') an dem Gasgeneratorkopf (6, 6', 6", 6"') angeordnet ist.

9. Gasgenerator nach einem Anspruch 8, **dadurch gekennzeichnet, dass** die Schneidkante (32, 32') einstückig mit dem Gasgeneratorkopf (6, 6', 6", 6"') ausgebildet ist.

10. Gasgenerator nach einem der Ansprüche 8 oder 9, **dadurch gekennzeichnet, dass** der Gasgeneratorkopf (6, 6', 6", 6"') einen größeren Durchmesser als ein einführseitiger Abschnitt (4) des Gasgenerators (2) aufweist.

11. Gasgenerator nach einem der vorangehenden Ansprüche, **dadurch gekennzeichnet, dass** die Schneidkante (32, 32') einen Winkel von 90° einschließt, vorzugsweise einen Winkel kleiner als 90° einschließt.

12. Bauteilsatz mit einem Gasgenerator (2) nach einem der vorangehenden Ansprüche und einem Airbaggehäuse (10), das eine Gasgeneratorkammer (12) aufweist, in die der Gasgenerator (2) einführbar ist, wobei Stützrippen (26) zum seitlichen Abstützen des Gasgenerators (2) in der Gasgeneratorkammer (12) vorgesehen sind, **dadurch gekennzeichnet, dass** die Stützrippen (26) in der Gasgeneratorkammer (12) und die Schneidkante (32, 32') des Gasgenerators (2) derart ausgebildet sind, dass die Schneidkante (32, 32') des Gasgenerators (2) die Stützrippen (26) während des Einführens zuschneidet.

13. Bauteilsatz nach Anspruch 12, **dadurch gekennzeichnet, dass** die Stützrippen (26) in Einführrichtung verlaufen.

14. Bauteilsatz nach einem der Ansprüche 12 oder 13, **dadurch gekennzeichnet, dass** die Stützrippen (26) einen Querschnitt aufweisen, der in Richtung der Mitte der Gasgeneratorkammer (12) verjüngt ist.

15. Bauteilsatz nach einem der Ansprüche 12 bis 14, **dadurch gekennzeichnet, dass** die Gasgeneratorkammer (12) eine Einführöffnung (14), einen öffnungsseitigen Abschnitt (16) und einen der Einführöffnung (14) abgewandten Abschnitt (18) aufweist, wobei der Durchmesser des öffnungsseitigen Abschnittes (16) größer als der Durchmesser des der Einführöffnung (14) abgewandten Abschnittes (18) ist.

16. Bauteilsatz nach Anspruch 15, **dadurch gekennzeichnet, dass** zwischen dem öffnungsseitigen Abschnitt (16) und dem der Einführöffnung (14) abgewandten Abschnitt (18) ein Ansatz (20) vorgesehen ist.

17. Bauteilsatz nach einem der Ansprüche 15 oder 16, **dadurch gekennzeichnet, dass** die Stützrippen (26) in dem öffnungsseitigen Abschnitt (16) vorgesehen sind.

18. Bauteilsatz nach einem der Ansprüche 12 bis 17, **dadurch gekennzeichnet, dass** die Schneidkante (32, 32') aus Metall und die Stützrippen (26) aus Kunststoff bestehen.

19. Bauteilsatz nach einem der Ansprüche 12 bis 18, **dadurch gekennzeichnet, dass** an dem Airbaggehäuse (10) Rastmittel (30) zum Verrasten mit dem Gasgenerator (2) in der Einbaulage vorgesehen sind.

20. Verfahren zur Herstellung einer Airbageinrichtung mit dem Verfahrensschritt
Bereitstellen eines Airbaggehäuses (10) mit einer Gasgeneratorkammer (12), in der Stützrippen (26) zum seitlichen Abstützen eines Gasgenerators (2) vorgesehen sind,
**gekennzeichnet durch** die Verfahrensschritte
Bereitstellen eines Gasgenerators (2) mit mindestens einer Schneidkante (32, 32') und
Einführen des Gasgenerators (10) in die Gasgeneratorkammer (12), wobei die Stützrippen (26) in der Gasgeneratorkammer (12) und die Schneidkante (32, 32') des Gasgenerators (10) derart ausgebildet sind, dass die Schneidkante (32, 32') des Gasgenerators (10) die Stützrippen (26) während des Einführens zuschneidet.

21. Verfahren nach Anspruch 20, bei dem ein Bauteilsatz nach einem der Ansprüche 12 bis 19 verwendet wird.

## Claims

1. Gas generator for an airbag device, which can be introduced into an gas generator chamber of an airbag housing, in which support ribs are provided for lateral support of the gas generator , **characterised in that** the gas generator (2) has at least one cutting edge (32, 32') for cutting the support ribs during insertion.

2. Gas generator according to claim 1, **characterised in that** the height of the support ribs can be reduced by the cutting edge (32, 32').

3. Gas generator according to either of claims 1 or 2, **characterised in that** the cutting edge (32, 32') is directed in the insertion direction of the gas generator (2).

4. Gas generator according to any one of the preceding claims, **characterised in that** the cutting edge (32, 32') is arranged on the periphery of the gas generator (2).

5. Gas generator according to claim 4, **characterised in that** a peripheral cutting edge (32, 32') is provided.

6. Gas generator according to any one of the preceding claims, **characterised in that** the gas generator (2) has a contact portion (34, 34', 34") for abutting on the cut face of the support ribs, the contact portion (34, 34', 34") in the radial direction being arranged at the same height as, or further out by a predetermined spadng (a) than, the cutting edge (32, 32').

7. Gas generator according to claim 6, **characterised in that** the contact portion (34, 34', 34") is arranged behind the cutting edge (32, 32').

8. Gas generator according to any one of the preceding claims, **characterised in that** the cutting edge (32, 32') is arranged on the gas generator head (6, 6', 6", 6"').

9. Gas generator according to claim 8, **characterised in that** the cutting edge (32, 32') is configured in one piece with the gas generator head (6, 6', 6", 6"').

10. Gas generator according to either of claims 8 or 9, **characterised in that** the gas generator head (6, 6', 6", 6"') has a larger diameter than an insertion-side portion (4) of the gas generator (2).

11. Gas generator according to any one of the preceding claims, **characterised in that** cutting edge (32, 32') includes an angle of 90°, preferably an angle of less than 90°.

12. Set of components with a gas generator (2) according to any one of the preceding claims and an airbag housing (10), which has a gas generator chamber (12), into which the gas generator (2) can be introduced, support ribs (26) for lateral support of the gas generator (2) being provided in the gas generator chamber (12), **characterised in that** the support ribs (26) in the gas generator chamber (12) and the cutting edge (32, 32') of the gas generator (2) are configured in such a way that the cutting edge (32, 32') of the gas generator (2) cuts the support ribs (26) during insertion.

13. Set of components according to claim 12, **characterised in that** the support ribs (26) extend in the insertion direction.

14. Set of components according to either of claims 12 or 13, **characterised in that** the support ribs (26) have a cross section which tapers in the direction of the centre of the gas generator chamber (12).

15. Set of components according to any one of claims 12 to 14, **characterised in that** the gas generator chamber (12) has an insertion opening (14), an opening-side portion (16) and a portion (18) remote from the insertion opening (14), the diameter of the opening-side portion (16) being larger than the diameter of the portion (18) remote from the insertion opening (14).

16. Set of components according to claim 15, **characterised in that** a shoulder (20) is provided between the opening-side portion (16) and the portion (18) remote from the insertion opening (14).

17. Set of components according to either of claims 15 or 16, **characterised in that** the support ribs (26) are provided in the opening-side portion (16).

18. Set of components according to any one of claims 12 to 17, **characterised in that** the cutting edge (32, 32') consists of metal and the support ribs (26) consist of plastics material.

19. Set of components according to any one of claims 12 to 18, **characterised in that** latching means (30) for latching to the gas generator (2) in the installed position are provided on the airbag housing (10).

20. Method for producing an airbag device with the method step of providing an airbag housing (10) with a gas generator chamber (12), in which support ribs (26) for the lateral support of a gas generator (2) are provided, **characterised by** the method steps of providing a gas generator (2) with at least one cutting edge (32, 32') and inserting the gas generator (10) into the gas generator chamber (12), the support ribs (26) in the gas generator chamber (12) and the cutting edge (32, 32') of the gas generator (10) being configured in such a way that the cutting edge (32, 32') of the gas generator (10) cuts the support ribs (26) during insertion.

21. Method according to claim 20, in which a set of components according to any one of claims 12 to 19 is used.

## Revendications

1. Générateur de gaz pour un dispositif de coussin gonflable de sécurité *(airbag)*, qui peut être introduit dans une chambre de générateur de gaz d'un boîtier d'airbag, dans laquelle des nervures d'appui sont prévues pour le soutien latéral du générateur de gaz, **caractérisé en ce que** le générateur de gaz (2) présente au moins une arête de coupe (32, 32') pour la coupe des nervures d'appui pendant l'introduction.

2. Générateur de gaz selon la revendication 1, **caractérisé en ce que** la hauteur des nervures de d'appui peut être réduite par l'arête de coupe (32, 32').

3. Générateur de gaz selon l'une quelconque des revendications 1 ou 2, **caractérisé en ce que** l'arête de coupe (32, 32') est dirigée dans le sens d'introduction du générateur de gaz (2).

4. Générateur de gaz selon l'une quelconque des revendications précédentes, **caractérisé en ce que** l'arête de coupe (32, 32') est disposée sur le pourtour du générateur de gaz (2).

5. Générateur de gaz selon la revendication 4, **caractérisé en ce qu'**une arête de coupe (32, 32') périphérique est prévue.

6. Générateur de gaz selon l'une quelconque des revendications précédentes, **caractérisé en ce que** le générateur de gaz (2) présente une partie d'appui (34, 34', 34") pour l'application sur la surface de coupe des nervures d'appui, la partie d'appui (34, 34', 34") étant disposée dans la direction radiale à la même hauteur ou à une distance (a) prédéfinie plus à l'extérieur que l'arête de coupe (32, 32').

7. Générateur de gaz selon la revendication 6, **caractérisé en ce que** la partie d'appui (34, 34', 34") est disposée derrière l'arête de coupe (32, 32').

8. Générateur de gaz selon l'une quelconque des revendications précédentes, **caractérisé en ce que** l'arête de coupe (32, 32') est disposée sur le sommet du générateur de gaz (6, 6', 6", 6"').

9. Générateur de gaz selon la revendication 8, **caractérisé en ce que** l'arête de coupe (32, 32') est conçue d'une seule pièce avec le sommet du générateur de gaz (6, 6', 6", 6"').

10. Générateur de gaz selon l'une quelconque des revendications 8 ou 9, **caractérisé en ce que** le sommet du générateur de gaz (6, 6', 6", 6"') présente un diamètre plus grand qu'une partie (4) côté introduction du générateur de gaz (2).

11. Générateur de gaz selon l'une quelconque des revendications précédentes, **caractérisé en ce que** l'arête de coupe (32, 32') forme un angle de 90°, de préférence un angle inférieur à 90°.

12. Ensemble de construction comprenant un générateur de gaz (2) selon l'une quelconque des revendications précédentes et un boîtier d'airbag (10), qui présente une chambre de générateur de gaz (12), dans laquelle le générateur de gaz (2) peut être introduit, des nervures d'appui (26) étant prévues pour le soutien latéral du générateur de gaz (2) dans la chambre du générateur de gaz (12), **caractérisé en ce que** les nervures d'appui (26) dans la chambre du générateur de gaz (12) et l'arête de coupe (32, 32') du générateur de gaz (2) sont réalisées de telle sorte que l'arête de coupe (32, 32') du générateur de gaz (2) coupe les nervures d'appui (26) pendant l'introduction.

13. Ensemble de construction selon la revendication 12, **caractérisé en ce que** les nervures d'appui (26) sont agencées dans le sens d'introduction.

14. Ensemble de construction selon l'une quelconque des revendications 12 ou 13, **caractérisé en ce que** les nervures d'appui (26) présentent une section qui rétrécit en direction du centre de la chambre du générateur de gaz (12).

15. Ensemble de construction selon l'une quelconque des revendications 12 à 14, **caractérisé en ce que** la chambre du générateur de gaz (12) présente une ouverture d'introduction (14), une partie (16) côté ouverture et une partie (18) opposée à l'ouverture d'introduction (14), le diamètre de la partie (16) côté ouverture étant supérieur au diamètre de la partie (18) opposée à l'ouverture d'introduction (14).

16. Ensemble de construction selon la revendication 15, **caractérisé en ce qu'**une embase (20) est prévue entre la partie (16) côté ouverture et la partie (18) opposée à l'ouverture d'introduction (14).

17. Ensemble de construction selon l'une quelconque des revendications 15 ou 16, **caractérisé en ce que** les nervures d'appui (26) sont prévues dans la partie (16) côté ouverture.

18. Ensemble de construction selon l'une quelconque des revendications 12 à 17, **caractérisé en ce que** l'arête de coupe (32, 32') et les nervures d'appui (26) sont respectivement en métal et en matière synthétique.

19. Ensemble de construction selon l'une quelconque des revendications 12 à 18, **caractérisé en ce que** des moyens d'encliquetage (30) pour l'encliquetage avec le générateur de gaz (2) dans la position de montage sont prévus sur le boîtier d'airbag (10).

20. Procédé pour la fabrication d'un dispositif d'airbag comprenant l'étape de procédé suivante
mise à disposition d'un boîtier d'airbag (10) avec une chambre de générateur de gaz (12), dans laquelle des nervures d'appui (26) sont prévues pour le soutien latéral d'un générateur de gaz (2),
**caractérisé par** les étapes de procédés suivantes
mise à disposition d'un générateur de gaz (2) avec au moins une arête de coupe (32, 32') et
introduction du générateur de gaz (10) dans la chambre du générateur de gaz (12), les nervures d'appui (26) dans la chambre du générateur de gaz (12) et l'arête de coupe (32, 32') du générateur de gaz (10) étant réalisées de telle sorte que l'arête de coupe (32, 32') du générateur de gaz (10) coupe les nervures d'appui (26) pendant l'introduction.

21. Procédé selon la revendication 20, dans lequel un ensemble de construction selon l'une quelconque des revendications 12 à 19 est utilisé.
